# EUROPÄISCHE PATENTSCHRIFT

(11) **EP 3 332 918 B1**
(45) Veröffentlichungstag und Bekanntmachung des Hinweises auf die Patenterteilung: **06.01.2021**
(21) Anmeldenummer: 17200540.7
(22) Anmeldetag: 08.11.2017
(51) Int. Cl.: B25F 5/00, B25B 21/02

(54) **HANDWERKZEUGMASCHINENVORRICHTUNG**
HANDHELD MACHINE TOOL
DISPOSITIF FORMANT MACHINE-OUTIL À MAIN

(30) Priorität: 06.12.2016 DE 102016224259
(43) Veröffentlichungstag der Anmeldung: 13.06.2018
(73) Patentinhaber: Robert Bosch GmbH, 70442 Stuttgart (DE)
(72) Erfinder: Blum, Jens, 70794 Filderstadt (DE); Herr, Tobias, 70569 Stuttgart (DE)

(56) Entgegenhaltungen:
- DE-U1-202011 106 465
- DE-U1-202016 103 701

## Beschreibung

### Stand der Technik

Es ist bereits eine Handwerkzeugmaschinenvorrichtung mit zumindest einem Antriebsgehäuse, mit zumindest einem Schlagwerksgehäuse und mit zumindest einem Drehschlagwerk, welches zumindest ein Planetengetriebe mit zumindest einem Hohlrad aufweist, vorgeschlagen worden.

Die DE 20 2016 103 701 U1 offenbart eine Handwerkzeugmaschinenvorrichtung nach dem Oberbegriff des Anspruchs 1.

### Offenbarung der Erfindung

Die Erfindung geht aus von einer Handwerkzeugmaschinenvorrichtung mit zumindest einem Antriebsgehäuse, mit zumindest einem Schlagwerksgehäuse und mit zumindest einem Drehschlagwerk, welches zumindest ein Planetengetriebe mit zumindest einem Hohlrad aufweist. Das Hohlrad weist zumindest ein Hohlradfixierelement auf, welches dazu vorgesehen ist, das Hohlrad an dem Schlagwerksgehäuse zu fixieren.

Unter einer "Handwerkzeugmaschinenvorrichtung" soll in diesem Zusammenhang insbesondere zumindest ein Teil, insbesondere eine Unterbaugruppe, einer Handwerkzeugmaschine verstanden werden. Insbesondere kann die Handwerkzeugmaschinenvorrichtung auch die gesamte Handwerkzeugmaschine umfassen. Die Handwerkzeugmaschine kann dabei als beliebige, vorteilhaft elektrische Maschine ausgebildet sein, vorteilhaft jedoch als Drehschlagschrauber. Unter einem "Antriebsgehäuse" soll in diesem Zusammenhang insbesondere eine Einheit verstanden werden, welche dazu vorgesehen ist, eine Antriebseinheit der Handwerkzeugmaschine insbesondere vollständig aufzunehmen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Antriebseinheit" soll insbesondere eine Einheit verstanden werden, die dazu vorgesehen ist, insbesondere elektrische Energie in kinetische Energie, insbesondere Rotationsenergie, umzuwandeln. Die Antriebseinheit weist insbesondere zumindest einen Elektromotor auf. Eine Antriebswelle der Antriebseinheit ist insbesondere zumindest teilweise von einer Ankerwelle des gehäuselosen Elektromotors gebildet. Unter einem "Schlagwerksgehäuse" soll in diesem Zusammenhang insbesondere eine Einheit verstanden werden, welche dazu vorgesehen ist, ein Schlagwerk, insbesondere ein Drehschlagwerk, der Handwerkzeugmaschine insbesondere vollständig aufzunehmen. Unter einem "Drehschlagwerk" soll in diesem Zusammenhang insbesondere ein Schlagwerk verstanden werden, welches dazu vorgesehen ist, eine zumindest im Wesentlichen kontinuierliche Leistungsabgabe einer Antriebseinheit in einen schlagförmigen Drehimpuls umzuwandeln. Das Drehschlagwerk kann insbesondere als ein Nockendrehschlagwerk oder als ein V-Nutendrehschlagwerk ausgebildet sein.

Unter einem "Planetengetriebe" soll insbesondere ein Getriebe verstanden werden, welches wenigstens einen mit einem Planetenträger verbundenen Planeten aufweist, der in radialer Richtung nach außen mit einem Hohlrad und/oder in radialer Richtung nach innen mit einem Sonnenrad gekoppelt ist. Das Sonnenrad, der Planet und/oder das Hohlrad können insbesondere von runden Zahnrädern oder von aufeinander abgestimmten unrunden Zahnrädern gebildet sein. Es können mehrere Planetengetriebe hintereinander geschaltet sein und/oder es können zwischen Planetenrad und Hohlrad mehrere Stufen zwischengeschaltet sein. Unter einem "Hohlrad" soll insbesondere ein Getrieberad verstanden werden, das einen Kranz aufweist, der in Form eines Zylindermantels oder in Form eines unterbrochenen Zylindermantels ausgebildet ist.

Unter einem "Hohlradfixierelement" soll in diesem Zusammenhang insbesondere ein unmittelbar an dem Hohlrad angeordnetes Fixierelement verstanden werden, welches dazu vorgesehen ist, eine zumindest im Wesentlichen mechanisch stabile kraftschlüssige und/oder formschlüssige Verbindung zwischen dem Hohlrad und dem Schlagwerksgehäuse herzustellen. Vorzugsweise ist das Hohlradfixierelement zumindest im Wesentlichen einstückig mit dem Hohlrad ausgebildet. Unter "einstückig" soll insbesondere zumindest stoffschlüssig verbunden verstanden werden, beispielsweise durch einen Schweißprozess, einen Kfebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Insbesondere kann das Hohlradfixierelement dazu vorgesehen sein, das Hohlrad werkzeuglos an dem Schlagwerksgehäuse zu fixieren. Das Hohlradfixierelement kann beispielsweise als ein Schraubelement, ein Rastelement, ein Klemmelement und/oder ein Bajonettverschlusselement ausgebildet sein.

Durch eine derartige Ausgestaltung kann eine gattungsgemäße Handwerkzeugmaschinenvorrichtung mit vorteilhaften konstruktiven Eigenschaften bereitgestellt werden. Insbesondere kann durch die Fixierung des Hohlrads an dem Schlagwerksgehäuse mittels eines Hohlradfixierelements des Hohlrads eine vorteilhaft kompakte Bauform, der Handwerkzeugmaschinenvorrichtung, eine vorteilhaft kurze Toleranzkette und/oder eine vorteilhaft einfache mechanische Verbindung des Hohlrads mit dem Schlagwerksgehäuse erreicht werden.

Erfindungsgemäß wird vorgeschlagen, dass die Handwerkzeugmaschine zumindest ein an dem Schlagwerksgehäuse angeordnetes und mit dem Hohlradfixierelement korrespondierendes Fixierelement zur Herstellung einer mechanischen Verbindung zwischen dem Hohlrad und dem Schlagwerksgehäuse aufweist. Insbesondere kann das Fixierelement einstückig mit dem Schlagwerksgehäuse ausgebildet sein und/oder zumindest kraft- und/oder formschlüssig mit dem Schlagwerksgehäuse verbunden sein. Das Fixierelement kann beispielsweise als ein zu dem Hohlradfixierelement korrespondierendes Schraubelement, Rastelement, Klemmelement und/oder Bajonettverschlusselement ausgebildet sein. Insbesondere ist das Fixierelement dazu vorgesehen, in einem montierten Zustand des Hohlrads an dem Schlagwerksgehäuse eine zumindest im Wesentlichen mechanisch stabile kraftschlüssige und/oder formschlüssige Verbindung mit dem Hohlradfixierelement einzugehen. Hierdurch kann eine vorteilhaft sichere Fixierung des Hohlrads erreicht werden.

Des Weiteren wird vorgeschlagen, dass das Hohlradfixierelement zumindest teilweise als ein Gewinde zu einer Verschraubung des Hohlrads mit dem Schlagwerksgehäuse ausgebildet ist. Insbesondere ist das Gewinde einstückig mit dem Hohlrad ausgebildet. Das Gewinde ist insbesondere zumindest im Wesentlichen an einem Umfang, insbesondere an einem Außenumfang und/oder einem Innenumfang, des Hohlrads angeordnet. Vorzugsweise weist das Hohlradfixierelement zumindest ein Außengewinde zu einer Verschraubung des Hohlrads mit dem Schlagwerkdeckel auf. Hierdurch kann eine vorteilhaft einfache und/oder sichere Verschraubung des Hohlrads mit dem Schlagwerksgehäuse erfolgen.

Ferner wird vorgeschlagen, dass die Handwerkzeugmaschinenvorrichtung zumindest ein an dem Schlagwerksgehäuse angeordnetes Fixierelement mit einem zu dem Gewinde des Hohlradfixierelements korrespondierenden Gewinde zu einer Verschraubung des Hohlrads mit dem Schlagwerksgehäuse aufweist. Insbesondere kann das Gewinde einstückig mit dem Schlagwerksgehäuse ausgebildet sein. Alternativ kann das Fixierelement als eine Schraubmuffe ausgebildet sein, welche an dem Schlagwerksgehäuse angeordnet ist. Das Gewinde ist insbesondere zumindest im Wesentlichen an einem Umfang, insbesondere an einem Außenumfang und/oder einem Innenumfang, des Schlagwerksgehäuses und/oder des Schraubmuffe angeordnet. Vorzugsweise weist die Handwerkzeugmaschinenvorrichtung zumindest ein an dem Schlagwerksgehäuse angeordnetes Fixierelement mit einem zu einem Außengewinde des Hohlradfixierelements korrespondierenden Innengewinde zu einer Verschraubung des Hohlrads mit dem Schlagwerksgehäuse auf. Hierdurch kann eine vorteilhaft einfache und/oder sichere Verschraubung des Hohlrads mit dem Schlagwerksgehäuse erfolgen. Ferner kann das Schlagwerksgehäuse einen vorteilhaft geringen Außendurchmesser aufweisen.

Des Weiteren wird vorgeschlagen, dass die Handwerkzeugmaschinenvorrichtung einen Schlagwerkdeckel aufweist, welcher einstückig mit dem Hohlrad ausgebildet ist. Unter einem "Schlagwerkdeckel" soll in diesem Zusammenhang insbesondere ein Deckelelement verstanden werden, welches dazu vorgesehen ist, das Drehschlagwerk in Richtung zumindest einer weiteren Handwerkzeugmaschineneinheit, insbesondere in Richtung einer Antriebseinheit, zumindest zu einem Großteil zu verschließen. Unter "zumindest zu einem Großteil" soll in diesem Zusammenhang insbesondere zumindest zu 51 %, vorzugsweise zumindest zu 65 % und besonders bevorzugt zumindest zu 75 % verstanden werden. Insbesondere weist der Schlagwerkdeckel zumindest eine Durchführungsausnehmung auf, welche zu einer zumindest teilweisen Durchführung zumindest einer Welle, insbesondere einer Antriebswelle, vorgesehen ist. Insbesondere sind der Schlagwerkdeckel und das Hohlrad zumindest im Wesentlichen von einem metallischen Material, vorzugsweise von einem metallischen Sintermaterial, gebildet.

Hierdurch kann eine vorteilhaft kompakte Bauform, insbesondere eine vorteilhaft geringe Baulänge, der Handwerkzeugmaschinenvorrichtung, eine vorteilhaft kurze Toleranzkette und/oder eine vorteilhaft mechanisch stabile Konstruktion erreicht werden.

Zudem wird eine Handwerkzeugmaschine, insbesondere ein Drehschlagschrauber, mit zumindest einer erfindungsgemäßen Handwerkzeugmaschinenvorrichtung vorgeschlagen. Hierdurch kann eine vorteilhaft kompakte Handwerkzeugmaschine, insbesondere ein vorteilhaft kompakter Drehschlagschrauber, bereitgestellt werden. Insbesondere kann die Handwerkzeugmaschine eine vorteilhaft geringe Baulänge aufweisen.

Die erfindungsgemäße Handwerkzeugmaschinenvorrichtung soll hierbei nicht auf die oben beschriebene Anwendung und Ausführungsform beschränkt sein. Insbesondere kann die erfindungsgemäße Handwerkzeugmaschinenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Teilschnittdarstellung einer Handwerkzeugmaschine, welche als ein Drehschlagschrauber ausgebildet ist,
- Fig. 2: eine Schnittdarstellung einer Handwerkzeugmaschinenvorrichtung der Handwerkzeugmaschine mit einer Antriebseinheit und einem Drehschlagwerk und
- Fig. 3: ein Hohlrad eines Planetengetriebes der Handwerkzeugmaschinenvorrichtung in einer perspektivischen Darstellung.

### Beschreibung der Ausführungsbeispiele

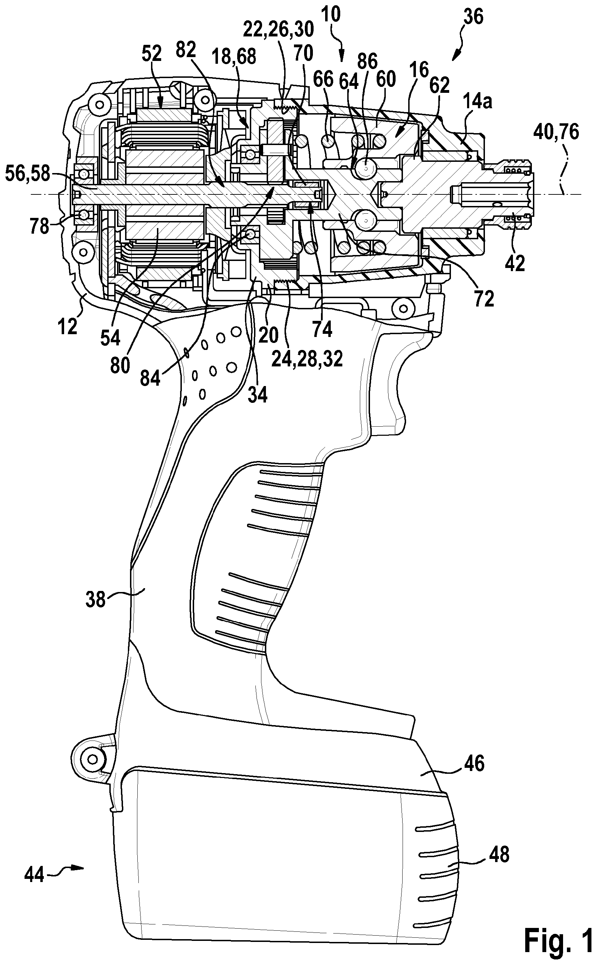

Figur 1 zeigt eine Handwerkzeugmaschine 36, welche als ein Drehschlagschrauber ausgebildet ist, in einer schematischen Teilschnittdarstellung. Die Handwerkzeugmaschine 36 ist als ein Akku-Drehschlagschrauber ausgebildet. Die Handwerkzeugmaschine 36 umfasst einen Handgriff 38, der sich zumindest im Wesentlichen senkrecht zu einer Rotationsachse 40 einer zur Aufnahme eines Einsatzwerkzeugs (hier nicht dargestellt) vorgesehenen Werkzeugaufnahme 42 der Handwerkzeugmaschine 36 erstreckt. Der Handgriff 38 umfasst an einer der Handwerkzeugmaschine 36 abgewandten Seite 44 eine Akkuaufnahme 46. Die Akkuaufnahme 46 ist dazu vorgesehen, eine Akkueinheit 48 zur Energieversorgung der Handwerkzeugmaschine 36 aufzunehmen.

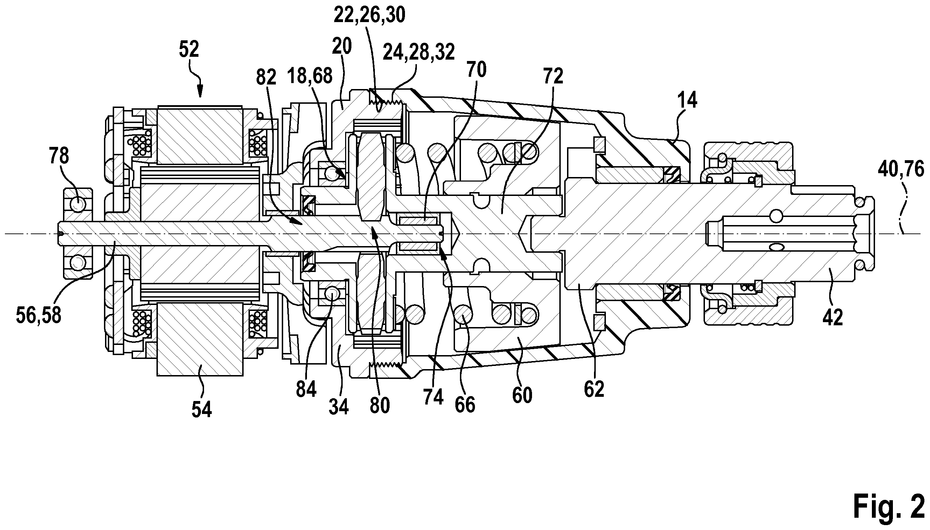

Ferner weist die Handwerkzeugmaschine 36 eine Handwerkzeugmaschinenvorrichtung 10 mit einer Antriebseinheit 52 und einem Drehschlagwerk 16 auf. Figur 2 zeigt die Handwerkzeugmaschinenvorrichtung 10 in einer Schnittdarstellung. Die Handwerkzeugmaschinenvorrichtung 10 weist ein Antriebsgehäuse 12 und ein Schlagwerksgehäuse 14 auf (vgl. Figur 1). Das Antriebsgehäuse 12 umschließt die Antriebseinheit 52 zumindest im Wesentlichen vollständig. Das Schlagwerksgehäuse 14 umschließt das Drehschlagwerk 16 zumindest im Wesentlichen vollständig (vgl. Figur 1). Die Antriebseinheit 52 ist als eine elektrische Antriebseinheit ausgebildet, welche mittels der Akkueinheit 48 mit elektrischer Energie versorgt wird. Die Antriebseinheit 52 weist einen Elektromotor 54 auf, welcher dazu vorgesehen ist, die von der Akkueinheit 48 bereitgestellte elektrische Energie in Rotationsenergie umzuwandeln. Ferner weist die Antriebseinheit 52 eine Antriebswelle 56 auf, welche dazu vorgesehen ist, die Rotationsenergie an das Drehschlagwerk 16 zu übertragen. Die Antriebswelle 56 ist zumindest teilweise von einer Ankerwelle 58 des Elektromotors 54 gebildet. Das Drehschlagwerk 16 ist beispielhaft als ein V-Nutendrehschlagwerk ausgebildet. Das Drehschlagwerk 16 ist dazu vorgesehen, eine kontinuierliche Leistungsabgabe der Antriebseinheit 52 in einen schlagförmigen Drehimpuls umzusetzen. Die Energieabgabe der Antriebseinheit 52 wird durch einen Schlag eines Schlägers 60 des Drehschlagwerks 16 auf einen korrespondierenden Amboss 62 mittels eines Impulses hoher Leistungsintensität an das Einsatzwerkzeug weitergegeben. Der Amboss 62 ist einstückig mit der Werkzeugaufnahme 42 ausgebildet. Der Schläger 60 ist derart gelagert, dass eine Axialbewegung und Radialbewegung möglich ist. Die Steuerung der Axialbewegung erfolgt durch V-förmige Nuten 64 und Mitnehmerkugeln 86. Eine Feder 66 sorgt für die Rückstellbewegung des Schlägers 60.

Das Drehschlagwerk 16 weist eine Zwischenwelle 72 auf, welche zumindest im Wesentlichen fluchtend zu der Antriebswelle 56 ausgerichtet ist. Des Weiteren weist die Handwerkzeugmaschinenvorrichtung 10 zumindest ein Lager 70 zur Lagerung der Antriebswelle 56 auf. Die Antriebswelle 56 ist zumindest teilweise innerhalb der Zwischenwelle 72 gelagert. Die Zwischenwelle 72 weist eine Aufnahmeausnehmung 74 auf, welche zu einer zumindest teilweisen Aufnahme der Antriebswelle 56 vorgesehen ist. Die Aufnahmeausnehmung 74 erstreckt sich zumindest im Wesentlichen entlang einer Rotationsachse 76 der Zwischenwelle 72. Die Antriebswelle 56 ragt in einem montierten Zustand zumindest teilweise in die Zwischenwelle 72, insbesondere in die Aufnahmeausnehmung 74 der Zwischenwelle 72, hinein. Das Lager 70 zur Lagerung der Antriebswelle 56 ist innerhalb der Aufnahmeausnehmung 74 angeordnet. Das Lager 70 zur Lagerung der Antriebswelle 56 ist als ein Wälzlager ausgebildet. Ein weiteres Lager 78 zur Lagerung der Antriebswelle 56 ist an einer der Werkzeugaufnahme 42 abgewandten Seite des Elektromotors 54 im Antriebsgehäuse 12 angeordnet.

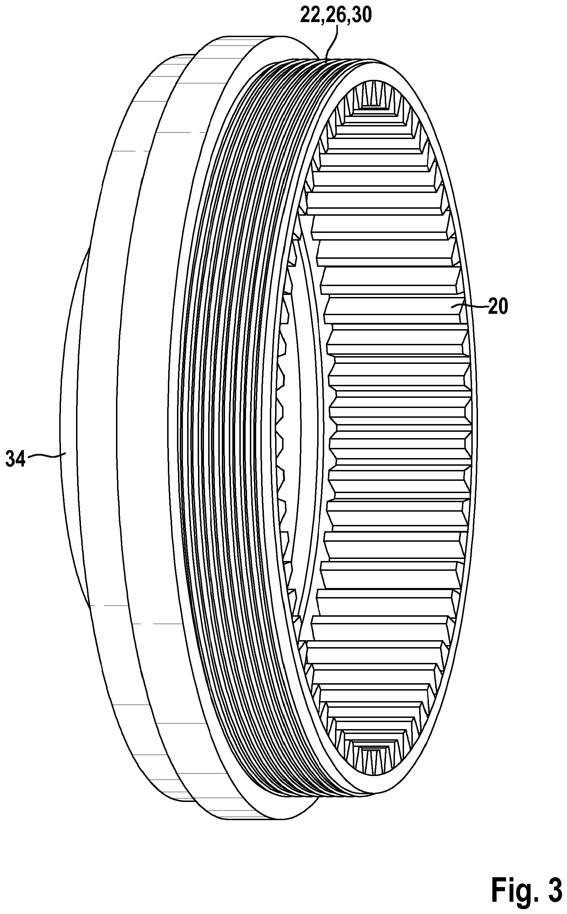

Das Drehschlagwerk 16 weist zumindest eine als ein einstufiges Planetengetriebe 18 ausgebildete Getriebeeinheit 68 auf. Das Lager 70 zur Lagerung der Antriebswelle 56 ist auf einer der Antriebseinheit 52 abgewandten Seite des Planetengetriebes 18 angeordnet. Eine Verzahnung 80 zwischen der Antriebswelle 56 und dem Planetengetriebe 18 ist zwischen dem Lager 70 und dem weiteren Lager 78 angeordnet. Alternativ kann die Getriebeeinheit 68 als ein mehrstufiges Planetengetriebe ausgebildet sein. Das Planetengetriebe 18 umfasst zumindest ein Hohlrad 20. Figur 3 zeigt das Hohlrad 20 in einer perspektivischen Ansicht. Das Hohlrad 20 weist zumindest ein Hohlradfixierelement 22 auf, welches dazu vorgesehen ist, das Hohlrad 20 an dem Schlagwerksgehäuse 14 zu fixieren. Das Hohlradfixierelement 22 ist zumindest teilweise als ein Gewinde 26 zu einer Verschraubung des Hohlrads 20 mit dem Schlagwerksgehäuse 14 ausgebildet ist. Vorzugsweise weist das Hohlradfixierelement 22 zumindest ein Außengewinde 30 zu einer Verschraubung des Hohlrads 20 mit dem Schlagwerksgehäuse 14 auf. Das Hohlradfixierelement 22 ist zumindest im Wesentlichen einstückig mit dem Hohlrad 20 ausgebildet.

Die Handwerkzeugmaschinenvorrichtung 10 weist zumindest ein an dem Schlagwerksgehäuse 14 angeordnetes und mit dem Hohlradfixierelement 22 korrespondierendes Fixierelement 24 zur Herstellung einer mechanischen Verbindung zwischen dem Hohlrad 20 und dem Schlagwerksgehäuse 14 auf. Das an dem Schlagwerksgehäuse 14 angeordnete Fixierelement 24 weist vorzugsweise ein zu dem Gewinde 26 des Hohlradfixierelements 22 korrespondierendes Gewinde 28 zu einer Verschraubung des Hohlrads 20 mit dem Schlagwerksgehäuse 14 auf. Vorzugsweise weist das an dem Schlagwerksgehäuse 14 angeordnete Fixierelement 24 ein zu dem Außengewinde 30 des Hohlradfixierelements 22 korrespondierenden Innengewinde 32 zu einer Verschraubung des Hohlrads 20 mit dem Schlagwerksgehäuse 14 auf. Das Fixierelement 24 ist einstückig mit dem Schlagwerksgehäuse 14 ausgebildet. Alternativ könnte das Fixierelement 24 beispielsweise auch als eine Schraubmuffe mit einem zu dem Gewinde 26 des Hohlradfixierelements 22 korrespondierenden Gewinde ausgebildet sein.

Ferner umfasst das Drehschlagwerk 16 einen Schlagwerkdeckel 34. Der Schlagwerkdeckel 34 ist zwischen der Antriebseinheit 52 und dem Planetengetriebe 18 angeordnet. Insbesondere ist der Schlagwerkdeckel 34 dazu vorgesehen, das Drehschlagwerk 16 in Richtung der Antriebseinheit 52, zumindest zu einem Großteil zu verschließen. Der Schlagwerkdeckel 34 weist eine Durchführungsausnehmung 82 auf, welche zu einer zumindest teilweisen Durchführung zumindest der Antriebswelle 56 vorgesehen ist. Der Schlagwerkdeckel 34 ist einstückig mit dem Hohlrad 20 ausgebildet. Der Schlagwerkdeckel 34 und das Hohlrad 20 bestehen zumindest im Wesentlichen aus einem metallischen Material, insbesondere aus einem metallischen Sintermaterial.

Die Handwerkzeugmaschinenvorrichtung 10 weist ferner ein Zwischenwellenlager 84 zur Lagerung der Zwischenwelle 72 auf. Das Zwischenwellenlager 84 ist als ein Wälzlager ausgebildet. Alternativ kann das Zwischenwellenlager 84 als ein Gleitlager ausgebildet sein. Das Zwischenwellenlager 84 ist als ein Radiallager ausgebildet, welches dazu vorgesehen die Zwischenwelle 72 drehbar in dem Schlagwerkdeckel 34 zu lagern. Das Zwischenwellenlager 84 ist zumindest teilweise innerhalb des Schlagwerkdeckels 34 ausgebildet. Das Zwischenwellenlager 84 ist unmittelbar an der Durchführungsausnehmung 82 des Schlagwerkdeckels 34 angeordnet.

## Patentansprüche

1. Handwerkzeugmaschinenvorrichtung mit zumindest einem Antriebsgehäuse (12), mit zumindest einem Schlagwerksgehäuse (14) und mit zumindest einem Drehschlagwerk (16), welches zumindest ein Planetengetriebe (18) mit zumindest einem Hohlrad (20) aufweist, wobei das Hohlrad (20) zumindest ein Hohlradfixierelement (22) aufweist, welches dazu vorgesehen ist, das Hohlrad (20) an dem Schlagwerksgehäuse (14) zu fixieren, **dadurch gekennzeichnet, dass** das Hohlradfixierelement (22) zumindest teilweise als ein Gewinde (26) zu einer Verschraubung des Hohlrads (20) mit dem Schlagwerksgehäuse (14) ausgebildet ist.

2. Handwerkzeugmaschinenvorrichtung nach Anspruch 1, **gekennzeichnet durch** zumindest ein an dem Schlagwerksgehäuse (14) angeordnetes und mit dem Hohlradfixierelement (22) korrespondierendes Fixierelement (24) zur Herstellung einer mechanischen Verbindung zwischen dem Hohlrad (20) und dem Schlagwerksgehäuse (14).

3. Handwerkzeugmaschinenvorrichtung nach Anspruch 1, **gekennzeichnet durch** zumindest ein an dem Schlagwerksgehäuse (14) angeordnetes Fixierelement (24) mit einem zu dem Gewinde (26) des Hohlradfixierelements (22) korrespondierenden Gewinde (28) zu einer Verschraubung des Hohlrads (20) mit dem Schlagwerksgehäuse (14).

4. Handwerkzeugmaschinenvorrichtung einem der vorhergehenden Ansprüche, **dadurch gekennzeichnet, dass** das Hohlradfixierelement (22) zumindest ein Außengewinde (30) zu einer Verschraubung des Hohlrads (20) mit dem Schlagwerksgehäuse (14) aufweist.

5. Handwerkzeugmaschinenvorrichtung nach Anspruch 4, **gekennzeichnet durch** zumindest ein an dem Schlagwerksgehäuse (14) angeordnetes Fixierelement (24) mit einem zu dem Außengewinde (30) des Hohlradfixierelements (22) korrespondierenden Innengewinde (32) zu einer Verschraubung des Hohlrads (20) mit dem Schlagwerksgehäuse (14).

6. Handwerkzeugmaschinenvorrichtung nach einem der vorhergehenden Ansprüche, **dadurch gekennzeichnet, dass** das Hohlradfixierelement (22) zumindest im Wesentlichen einstückig mit dem Hohlrad (20) ausgebildet ist.

7. Handwerkzeugmaschinenvorrichtung nach einem der vorhergehenden Ansprüche, **gekennzeichnet durch** einen Schlagwerkdeckel (34), welcher einstückig mit dem Hohlrad (20) ausgebildet ist.

8. Handwerkzeugmaschine (36) mit zumindest einer Handwerkzeugmaschinenvorrichtung (10) nach einem der vorhergehenden Ansprüche.

## Claims

1. Portable power tool device having at least one drive housing (12), having at least one percussion mechanism housing (14) and having at least one rotary percussion mechanism (16), which has at least one planetary transmission (18) with at least one ring gear (20), wherein the ring gear (20) has at least one ring gear fixing element (22) that is provided to fix the ring gear (20) to the percussion mechanism housing (14), **characterized in that** the ring gear fixing element (22) is at least partially in the form of a thread (26) for screwing the ring gear (20) to the percussion mechanism housing (14).

2. Portable power tool device according to Claim 1, **characterized by** at least one fixing element (24), which is arranged on the percussion mechanism housing (14) and corresponds to the ring gear fixing element (22), for establishing a mechanical connection between the ring gear (20) and the percussion mechanism housing (14).

3. Portable power tool device according to Claim 1, **characterized by** at least one fixing element (24), which is arranged on the percussion mechanism housing (14), having a thread (28), corresponding to the thread (26) of the ring gear fixing element (22), for screwing the ring gear (20) to the percussion mechanism housing (14).

4. Portable power tool device according to one of the preceding claims, **characterized in that** the ring gear fixing element (22) has at least one external thread (30) for screwing the ring gear (20) to the percussion mechanism housing (14).

5. Portable power tool device according to Claim 4, **characterized by** at least one fixing element (24), which is arranged on the percussion mechanism housing (14), having an internal thread (32), corresponding to the external thread (30) of the ring gear fixing element (22), for screwing the ring gear (20) to the percussion mechanism housing (14).

6. Portable power tool device according to one of the preceding claims, **characterized in that** the ring gear fixing element (22) is formed at least substantially in one piece with the ring gear (20).

7. Portable power tool device according to one of the preceding claims, **characterized by** a percussion mechanism cover (34), which is formed in one piece with the ring gear (20).

8. Portable power tool (36) having at least one portable power tool device (10) according to one of the preceding claims.

## Revendications

1. Dispositif de machine-outil à main, comprenant au moins un boîtier d'entraînement (12), comprenant au moins un boîtier de mécanisme de percussion (14), et comprenant au moins un mécanisme de roto-percussion (16) qui présente au moins un engrenage planétaire (18) muni d'au moins une couronne à denture intérieure (20), la couronne à denture intérieure (20) présentant au moins un élément de fixation de couronne à denture intérieure (22) qui est prévu pour fixer la couronne à denture intérieure (20) au boîtier de mécanisme de percussion (14), **caractérisé en ce que** l'élément de fixation de couronne à denture intérieure (22) est réalisé au moins en partie comme un filetage (26) pour visser la couronne à denture intérieure (20) sur le boîtier de mécanisme de percussion (14).

2. Dispositif de machine-outil à main selon la revendication 1, **caractérisé par** au moins un élément de fixation (24) disposé sur le boîtier de mécanisme de percussion (14) et correspondant à l'élément de fixation de couronne à denture intérieure (22) pour établir un raccordement mécanique entre la couronne à denture intérieure (20) et le boîtier de mécanisme de percussion (14).

3. Dispositif de machine-outil à main selon la revendication 1, **caractérisé par** au moins un élément de fixation (24) disposé sur le boîtier de mécanisme de percussion (14) et muni d'un filetage (28) correspondant au filetage (26) de l'élément de fixation de couronne à denture intérieure (22) pour visser la couronne à denture intérieure (20) sur le boîtier de mécanisme de percussion (14).

4. Dispositif de machine-outil à main selon l'une quelconque des revendications précédentes, **caractérisé en ce que** l'élément de fixation de couronne à denture intérieure (22) présente au moins un filetage mâle (30) pour visser la couronne à denture intérieure (20) sur le boîtier de mécanisme de percussion (14).

5. Dispositif de machine-outil à main selon la revendication 4, **caractérisé par** au moins un élément de fixation (24) disposé sur le boîtier de mécanisme de percussion (14) et muni d'un taraudage (32) correspondant au filetage mâle (30) de l'élément de fixation de couronne à denture intérieure (22) pour visser la couronne à denture intérieure (20) sur le boîtier de mécanisme de percussion (14).

6. Dispositif de machine-outil à main selon l'une quelconque des revendications précédentes, **caractérisé en ce que** l'élément de fixation de couronne à denture intérieure (22) est réalisé au moins substantiellement d'une seule pièce avec la couronne à denture intérieure (20) .

7. Dispositif de machine-outil à main selon l'une quelconque des revendications précédentes, **caractérisé par** un couvercle de mécanisme de percussion (34) qui est réalisé d'une seule pièce avec la couronne à denture intérieure (20).

8. Machine-outil à main (36), comprenant au moins un dispositif de machine-outil à main (10) selon l'une quelconque des revendications précédentes.
